# EUROPÄISCHE PATENTSCHRIFT

(11) **EP 2 894 076 B1**
(45) Veröffentlichungstag und Bekanntmachung des Hinweises auf die Patenterteilung: **21.09.2016**
(21) Anmeldenummer: 14004309.2
(22) Anmeldetag: 19.12.2014
(51) Int. Cl.: B62D 1/06

(54) **Lenkrad**
Steering wheel
Volant

(30) Priorität: 14.01.2014 DE 202014000139 U
(43) Veröffentlichungstag der Anmeldung: 15.07.2015
(73) Patentinhaber: I.G. Bauerhin GmbH, 63584 Gründau (DE)
(72) Erfinder: Berger, Daniel, D-63776 Mömbris (DE); Letzas, Volker, D-64839 Münster (DE); Hein, Alexander, D-63584 Gründau (DE); Emmerlich, Thomas, D-63505 Langenselbold (DE)
(74) Vertreter: Grimm, Ekkehard

(56) Entgegenhaltungen:
- EP-A1- 2 428 429
- EP-A2- 2 293 647
- DE-A1-102010 025 534

## Beschreibung

Die vorliegende Erfindung betrifft ein Lenkrad mit einem Lenkradkranz und einem dreidimensional verformten Heizelement, das zumindest einen oder mehrere Heizleiter, die wellen- oder mäanderförmig auf einem Grundmaterial verlegt und mittels Näh- oder Stickfaden an dem Grundmaterial befestigt sind, umfasst und das auf einem Kernkörper des Lenkradkranzes befestigt ist, sowie ein entsprechendes Verfahren zum Befestigen eines dreidimensional verformten Heizelements an einem Kernkörper eines Lenkradkranzes eines Lenkrads.

Ein solches Lenkrad ist aus der DE 20 2010 012 582 U1 bekannt.

Eine Forderung an Lenkräder mit Lenkradheizung ist diejenige, dass sich das Heizelement nicht durch den Lenkradbezug abzeichnen darf oder dass das Heizelement durch den Lenkradbezug von dem Fahrer fühlbar ist. Dies setzt unter anderem voraus, dass das Heizelement bei der Fertigung des Lenkrads faltenfrei auf den Kernkörper des Lenkradkranzes aufgebracht wird. Gleichzeitig muss die Anbringung des Heizelements an dem Kernkörper durch einen einfachen und verfahrensökonomischen Vorgang erzielbar sein. Hierzu wird nach der DE 20 2010 012 582 U1 das Heizelement bzw. die Heizmatte mittels auf dem Kernkörper aufgebrachten noppenförmigen, hakenförmigen und/oder pilzförmigen Elementen, die die Heizmatte durchdringen und sich an dem Trägermaterial verhaken, fixiert.

Eine weitere bekannte Maßnahme, um ein Heizelement an dem Kernkörper eines Lenkradkranzes zu befestigten, ist diejenige, ein doppelseitiges Klebeband einzusetzen. Üblicherweise ist dieses doppelseitige Klebeband bereits an dem vorkonfektionierten Heizelement vorhanden und zunächst durch ein Abdeckband abgedeckt. Bei der Handhabung eines solchen Heizelements muss vor dessen Aufbringung auf einen Kernkörper das Abdeckband abgezogen werden. Es tritt jedoch auf, dass sich das Abdeckband auch vor der Aufbringung des Heizelements auf dem Kernkörper löst, so dass die vorkonfektionierten Heizelemente miteinander verkleben können.

Die DE 10 2010 025 534 A1 beschreibt ein Heizelement für Lenkräder zum Aufbringen auf einen Kernkörper, das mindestens einen wellen- oder mäanderförmig verlaufenden Heizleiter aufweist, der in eine schaumförmige Elastomerschicht oder eine verdichtete PU-Schaumschicht eingebettet ist. Der Heizleiter ist durch einen Faden in Näh- oder Sticktechnik befestigt. Auf der Elastomer- oder der PU-Schaumschicht ist auf der dem Heizleiter abgewandten Seite mindestens eine textile Schicht aufgebracht, wobei der Faden, der den Heizleiter befestigt, sowohl die Elastomer- oder die PU-Schaumschicht als auch die textile Schicht durchdringt. Die textile Schicht kann aus einem Gestricke oder Gewirke oder einem Tüllgewebe bestehen.

Ein weiteres elektrisches Lenkradheizelement ist in der DE 196 11 231 C1 beschrieben. Das Heizelement umfasst ein flächig auf der einen Seite einer selbstklebenden Folie aufgebrachtes elektrisch leitfähiges Material. Die andere Seite der Klebefolie ist mit einer Klebeschutzfolie abgedeckt. Zur Befestigung dieses Heizelements an dem Kernkörper eines Lenkrads wird die Klebeschutzfolie abgezogen.

Die DE 20 2007 010 960 U1 beschreibt ein elektrisches Heizelement, das beispielsweise als Lenkradheizung eingesetzt werden kann. Entlang des Kernkörpers ist mindestens ein Leitstrang verlegt, der eine Dicke bis zu 3 mm haben kann. Dazu ist der Leit- oder Heizstrang mit einem Kleber direkt an dem als Träger dienenden Kernkörper verklebt.

Schließlich beschreibt die DE 103 39 087 A1 eine Lenkradheizung, bei der die Heizleiter auf einer Folie als Grundmaterial verlegt sind und bei der über die auf dem Grundmaterial verlaufenden Heizleiter mindestens eine Deckfolie angeordnet ist, welche zur Oberfläche des Heizelements hin eine Sperrschicht für gasförmige, flüssige und/oder gelöste feste Chemikalien bildet.

Der vorliegenden Erfindung liegt die Aufgabe zugrunde, ein Lenkrad mit einem dreidimensional verformten Heizelement zu schaffen, wobei das Heizelement die Eigenschaften besitzen soll, dass es schnell und einfach an dem Kernkörper angebracht werden kann, dass es sich nicht durch den Bezug des Lenkrads oder äußere Verkleidungselemente abzeichnet und dass es nach der Anbringung keine Knitter-oder Faltenbildung zeigt. Auch ist es Aufgabe der Erfindung, ein Verfahren zum Befestigen eines dreidimensional verformten Heizelements an einem Kernkörper eines Lenkradkranzes eines Lenkrads anzugeben.

Gelöst wird diese Aufgabe durch ein Lenkrad mit den Merkmalen des Anspruchs 1 und durch ein Verfahren mit den Merkmalen des Anspruchs 14. Bevorzugte Ausführungsformen ergeben sich aus den abhängigen Ansprüchen.

Das erfindungsgemäße Lenkrad zeichnet sich dadurch aus, dass das Heizelement an dem Kernkörper durch ein Klebemittel befestigt ist, das auf zumindest einem Teilbereich der dem Kernkörper abgewandten Außenfläche des Grundmaterials aufgebracht ist, wobei das Klebemittel das Grundmaterial bis zum Kernkörper durchdringt. Auf diese Art und Weise ist die Fertigung eines beheizten Lenkrads möglich, bei dem das Heizelement in einfacher Weise faltenfrei auf den Kernkörper aufgebracht werden kann. Nachdem das vorkonfektionierte Heizelement auf dem Kernkörper positioniert ist, wird Klebemittel zumindest in Teilbereichen von der Außenfläche des Grundmaterials aus so aufgetragen, dass es das Grundmaterial bis zum Kernkörper durchdringt und dadurch das Heizelement mit dem Kernkörper verklebt. Es ist möglich, vor und nach der Aufbringung des Klebemittels auf das Grundmaterial das Heizelement auszurichten und gegebenenfalls die Position des Grundmaterials mit dem Heizelement zu korrigieren. Weiterhin können die vorkonfektionierten Heizelemente vor Aufbringung auf den Kernkörper einfach gehandhabt werden, da sie noch nicht mit einem Klebemittel versehen sind. Auch ist es nicht notwendig, zusätzliche Arbeitsschritte vorzunehmen, wie beispielsweise das Abziehen eines Abdeckbands von einem doppelseitigen Klebeband, das die Klebefläche bedeckt. Schließlich kann die Menge des erforderlichen Klebemittels, um das Heizelement an dem Kernkörper zu befestigen, auf ein Minimum reduziert werden.

Bei dem Verfahren zum Befestigen eines dreidimensional verformten Heizelements an einem Kernkörper eines Lenkradkranzes eines Lenkrads, wobei das Heizelement einen oder mehrere Heizleiter aufweist, werden die Heizleiter wellen- oder mäanderförmig auf einem Grundmaterial verlegt und mittels Näh- oder Stickfaden an dem Grundmaterial befestigt. Das Heizelement wird dann an dem Kernkörper mit Klebemittel befestigt, wobei das Klebemittel auf zumindest einem Teilbereich der dem Kernkörper abgewandten Außenfläche des Grundmaterials, nachdem das Heizelement auf dem Kernkörper aufgelegt ist, derart aufgebracht wird, dass das Klebemittel das Grundmaterial bis zum Kernkörper durchdringt.

Bevorzugt wird ein Grundmaterial eingesetzt, das gitter- oder wabenförmige Öffnungen aufweist. Diese Öffnungen gewährleisten, dass eine ausreichende Menge an Klebemittel das Grundmaterial bis zu dem Kernkörper durchdringt. Bevorzugt sollten diese Öffnungen eine Öffnungsweite im Bereich von 0,5 mm bis 3 mm, noch bevorzugter von 0,5 mm bis 2 mm, und noch bevorzugter nicht größer als 1,5 mm, aufweisen, wobei auch Öffnungsweiten unterhalb von 0,5 mm, beispielsweise im Bereich von 0,3 mm, in bestimmten Fällen bevorzugt sind.

Als Klebemittel kann ein lösungsmittelfreies Klebemittel eingesetzt werden, das vorzugsweise ein auf Wasser basierendes Klebemittel ist. Mit einem solchen Klebemittel ist gewährleistet, dass es nicht mit anderen Materialien, beispielsweise dem Material des Kernkörpers oder eines das Heizelement bedeckenden Bezugs, reagiert. Ein geeignetes Klebemittel ist swift®tak 2042; vorgesehen ist aber auch helmitin® Kleber 35042.

Auch ein lösungsmittelhaltiges Klebemittel kann in bestimmten Anwendungsfällen bevorzugt sein, beispielsweise dann, wenn ein lösungsmittelfreies Klebemittel das Heizelement während oder nach dem Aufbringen des Lenkradbezugs nicht korrekt am Kernkörper anhaftet.

Für eine präzise Fixierung des Heizelements an dem Grundmaterial kann das Klebemittel ein Transferklebstoff, ein pastöser Kleber oder ein fester Kleber sein, die zur Fixierung des Heizelements an dem Kernkörper auch nur punktweise aufgebracht werden.

Es ist vorgesehen, dass das Heizelement um den Umfang des Kernkörpers derart gelegt ist, dass Längskanten des Grundmaterials in Querschnitts-Umfangsrichtung des Kernkörpers gesehen zumindest aneinanderstoßen, wobei das Klebemittel zumindest im Bereich der aneinanderstoßenden Längskanten des Grundmaterials aufgebracht ist. Diese Längskanten des Grundmaterials können auch geringfügig oder überlappen, wobei dieser Überlappungsbereich in vorteilhafter Weise auf der Innenseite des Kernkörpers liegen sollte, das bedeutet die Innenseite des Kernkörpers, die zur Nabe des Lenkrads hinweist.

In einer weiteren Ausführungsform ist vorgesehen, dass das Heizelement um den Umfang des Kernkörpers derart gelegt ist, dass Längskanten des Grundmaterials in Querschnitts-Umfangsrichtung des Kernkörpers gesehen einen Spalt dazwischen belassend gegenüberliegend beabstandet sind, wobei das Klebemittel zumindest im Bereich dieser Längskanten des Grundmaterials aufgebracht ist. Der beabstandete Bereich der beiden Längskanten kann mit Klebemittel aufgefüllt sein.

Weiterhin kann das Heizelement um den Umfang des Kernkörpers derart gelegt werden, dass die Längskanten des Grundmaterials in Radial-Umfangsrichtung des Kernkörpers gesehen zumindest aneinanderstoßen, wobei das Klebemittel zumindest im Bereich der aneinanderstoßenden Längskanten des Grundmaterials aufgebracht ist. Auch können bei dieser letzteren Maßnahme diese zumindest aneinanderstoßenden Längskanten des Grundmaterials in Radial-Umfangsrichtung miteinander vernäht werden, wobei diese Längskanten auch geringfügig überlappen können, um in einem solchen Überlappungsbereich diese Längskanten zu vernähen.

Ein solches an den Längskanten des Grundmaterials in Radial-Umfangsrichtung vernähtes Heizelement kann vorkonfektiöniert werden, so dass es zur Montage an dem Kernkörper zunächst als eine Art Ring um den Außenumfang des Kernkörpers gelegt wird, vorzugsweise unter geringer Spannung, um dann die Längskanten in der Querschnitt-Umfangsrichtung des Kernkörpers an dem Kernkörper mit dem Klebemittel zu befestigen, das von der dem Kernkörper abgewandten Außenfläche des Grundmaterials aus aufgebracht wird.

Für einige Anwendungsfälle wird das Heizelement auf seiner dem Kernkörper abgewandten Außenfläche durch einen Schaum zumindest teilweise umschlossen.

Mit dem Klebemittel, mit dem das Heizelement an dem Kernkörper befestigt wird, kann gleichzeitig ein Lenkradbezug befestigt werden. Es ist auch vorgesehen, dass, nachdem das Heizelement an dem Kernkörper befestigt ist, insbesondere dann, wenn es mit dem Klebemittel zunächst nur vorfixiert ist, eine weitere Klebeschicht auf die Außenseite des Grundmaterials aufgebracht wird, die dann auch gleichzeitig den Lenkradbezug mit dem Heizelement verkleben kann.

Der Lenkradbezug kann auf seiner dem Kernkörper zugewandten Innenfläche eine Polsterschicht aufweisen.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: ein Lenkrad mit einem Heizelement, wobei der Aufbau des Kernkörpers im Detail in einer Querschnittsdarstellung auf der rechten Seite dargestellt ist,
- Figur 2: eine schematische Explosionsdarstellung des Aufbaus eines Heizelements, wie es auch in dem Lenkrad der Figur 1 verwendet werden kann,
- Figur 3: einen Schnitt durch ein Heizelement, das in seinem Aufbau demjenigen entspricht, das in Figur 2 dargestellt ist, allerdings mit einer Modifikation des Heizelements,
- Figur 4: ein weiteres Lenkrad in einer schematischen Darstellung, vergleichbar mit derjenigen der Figur 1, wobei allerdings die Längskanten des Grundmaterials des Heizelements, in Radial-Umfangsrichtung eines Kernkörpers gesehen, in dieser weiteren Ausführungsform miteinander vernäht sind, und
- Figur 5: eine Detail-Querschnittsdarstellung des Heizelements der Figur 4 im Bereich der Verbindungsstelle des Grundmaterials in Radial-Umfangsrichtung.

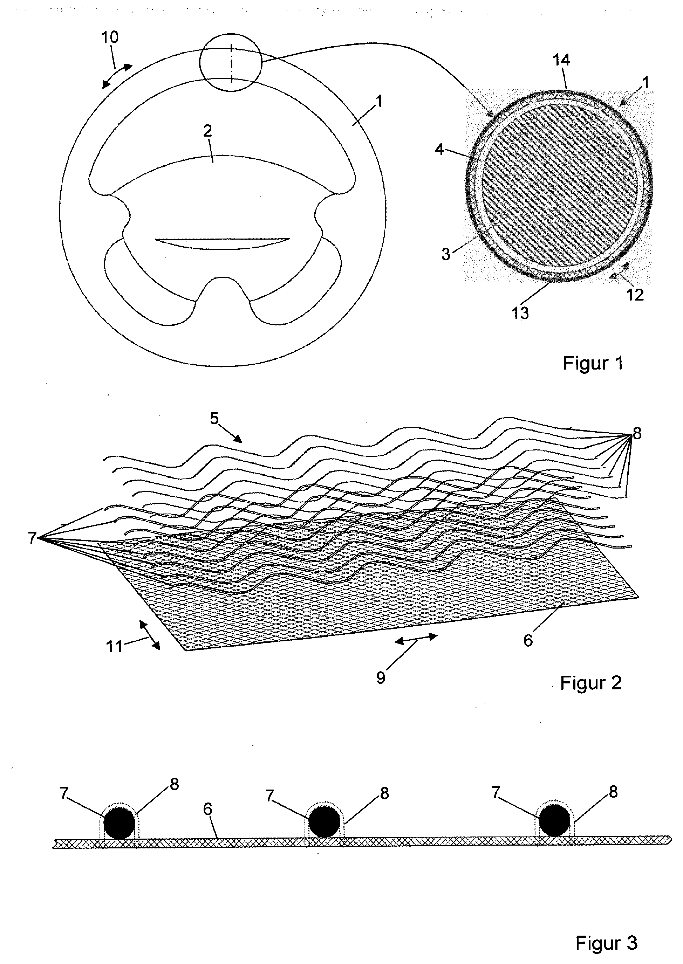

Das Lenkrad, wie es in Figur 1 dargestellt ist, umfasst einen Lenkradkranz 1, der an einer Nabe gehalten ist, die durch einen Pralltopf 2 abgedeckt ist. Der Lenkradkranz 1 besitzt einen massiven Kernkörper 3, wie dies die Querschnittsansicht der Figur 1 zeigt, der von einer dünnen Schaumschicht 4 allseitig umgeben sein kann.

Zum Beheizen des Lenkradkranzes 1 des Lenkrads ist ein Heizelement 5 vorgesehen, wie dies in der rechten Darstellung der Figur 1 im Schnitt dargestellt ist. Das Heizelement 5 ist darüber hinaus in Figur 2 in einer Explosionsdarstellung und in Figur 3 in einer Schnittdarstellung gezeigt.

Soweit vorstehend als auch nachfolgend der Kernkörper 3 erwähnt ist, auf den das Heizelement aufgebracht wird, so schließt der Begriff Kernkörper auch eine Schaumschicht, die darauf aufgebracht ist, wie beispielsweise die Schaumschicht 4, mit ein; folglich wird auch der Kernkörper 3 mit der Schaumschicht 4 als Kernkörper bezeichnet, auf den das Heizelement aufgebracht ist.

Wie insbesondere anhand der Figur 2 zu erkennen ist, umfasst das Heizelement 5 ein Grundmaterial 6, auf dem ein wellen- oder mäanderförmig verlaufender Heizleiter 7 in Näh- oder Sticktechnik mittels Näh- oder Stickfäden 8 befestigt ist, wie dies detaillierter die Figur 3 darstellt.

Das Grundmaterial 6 weist im Zuschnitt, wie die Figur 2 zeigt, eine Länge in Längsrichtung, durch den Doppelpfeil 9 angedeutet, auf, die der Umfangslänge des Lenkradkranzes 1 bzw. des Kernkörpers 3, mit dem Doppelpfeil 10 in Figur 1 angegeben, entspricht, wobei diese Umfangslänge auch als Radial-Umfangsrichtung bezeichnet wird. Die Breite des Zuschnitts des Grundmaterials 6 der Figur 2, angedeutet durch den Doppelpfeil 11, entspricht der Querschnitt-Umfangsrichtung des Lenkradkranzes 1 bzw. des Kernkörpers 3 mit der Schaumschicht 4, in Figur 1 mit dem Doppelpfeil 12 angedeutet.

Bei dem Grundmaterial 6 handelt es sich um ein Gewirke, Gestricke oder einen Tüll, wobei das Grundmaterial 6 gitter- oder wabenförmige Öffnungen aufweist. Die Öffnungsweite dieser Öffnungen liegt bevorzugt im Bereich von 0,3 mm bis 1 mm.

Um das Heizelement 5 an dem Kernkörper 3 oder an der Schaumschicht 4, die den Kernkörper 3 bedeckt, anzubringen, wird dieses um den Kernkörper 3 bzw. die Schaumschicht 4 herum gelegt, so dass die beiden Längskanten in der Umfangsrichtung (Doppelpfeil 12 der Figur 1) ausgerichtet sind. Das Heizelement 5 kann so orientiert sein, dass sich die Heizleiter 7 entweder auf der Seite des Grundmaterials 6 befinden, die zu der Schaumschicht 4 hinweist, oder auf derjenigen Seite des Grundmaterials 6, die von dem Kernkörper 3 abgewandt ist. Die Längskanten des Grundmaterials 6 stoßen in der Umfangsrichtung 12 aneinander; diese Stoßstelle ist in Figur 1 mit dem Bezugszeichen 13 gekennzeichnet. Nachdem das Heizelement 5 in dieser Art auf der Schaumschicht 4 im Wesentlichen faltenfrei ausgerichtet ist, wird von der dem Kernkörper 3 abgewandten Außenfläche des Grundmaterials 6 aus ein Klebemittel aufgebracht, und zwar in einer solchen Menge, dass es das Grundmaterial 6 bis zu dem Kernkörper 3 bzw. der Schaumschicht 4 durchdringt.

Für diese Durchdringung ist die gitter- oder wabenförmige Struktur des Grundmaterials 6 von Vorteil. Das Klebemittel wird erst dann aufgebracht, wenn das Heizelement 5 in der korrekten Position ausgerichtet ist.

Es ist ausreichend, wenn das Klebemittel nur im Bereich der Stoßstelle 13 von der Außenseite auf das Grundmaterial 6 aufgebracht wird. Zusätzlich werden die Längskanten des Grundmaterials 6 (die Kanten des Grundmaterials 6 in Richtung des Doppelpfeils 9 in Figur 2) mit dem Kernkörper 3 verklebt, indem auch in diesem Bereich Klebemittel von der Außenseite auf das Grundmaterial 6 aufgebracht wird, das auf dem Kernkörper 3 aufliegt.

Das verwendete Klebemittel ist von einer solchen Konsistenz, dass es in geeigneter Weise das Grundmaterial 6 durchdringt. Falls eine Struktur des Grundmaterials 6 verwendet wird, die große Öffnungen aufweist, kann ein dickflüssigeres Klebemittel, beispielsweise eine Klebepaste, verwendet werden, während bei kleineren Öffnungen mit Öffnungsweiten im Bereich von 0,3 mm bis 0,5 mm einem flüssigen oder gut fließfähigen Klebemittel der Vorzug zu geben ist. Um chemische Reaktionen mit dem Material der Schaumschicht 4, des Kernkörpers 3 oder einem späteren Bezug 14, wie er in Figur 1 angedeutet ist, des Lenkradkranzes 1 zu vermeiden, wird ein lösungsmittelfreies Klebemittel eingesetzt. Allerdings können die Materialen auch so aufeinander abgestimmt werden, dass ein lösungsmittelhaltiges Klebemittel eingesetzt werden kann. Als Klebemittel hat sich Pattex® Classic bewährt.

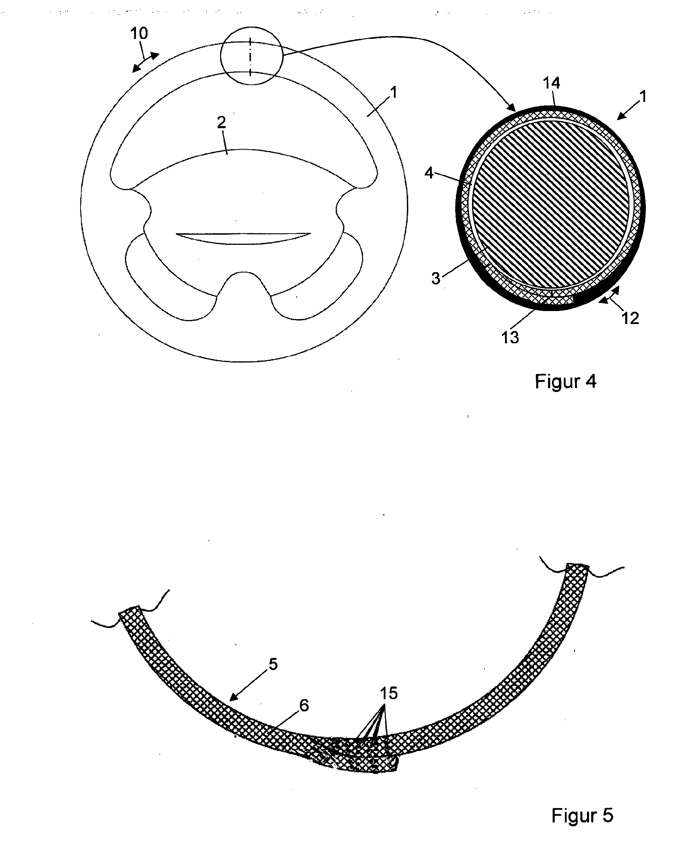

Die Ausführungsform, wie sie in den Figuren 4 und 5 dargestellt ist, ist im Wesentlichen mit derjenigen der Figur 1 vergleichbar, allerdings sind die Kanten des Grundmaterials 6 des Heizelements 5 in der Querschnitts-Umfangsrichtung 12 des Kernkörpers 3 gegenseitig überlappend ausgerichtet, wie ein Vergleich der beiden Querschnittsdarstellungen rechts in Figur 1 und rechts in Figur 4 verdeutlicht.

In Figur 5, die nur das Heizelement 5 in Umfangsrichtung 10 des Kernkörpers 3 zeigt, sind die Enden des Grundmaterials 6, die in Richtung des Doppelpfeils 11 in Figur 2 verlaufen, vor Aufbringung auf dem Kernkörper 3 geringfügig überlappend miteinander verbunden, beispielsweise miteinander verklebt, und zusätzlich, oder alternativ zu einer Verklebung, in diesem Überlappungsbereich mit einem Nähfaden 15 vernäht. Dieses vorgefertigte, ringförmige Heizelement 5 wird dann um den Kernkörper 3 in dessen Umfangsrichtung (Doppelpfeil 10) aufgebracht, um dann anschließend die Längskanten des Heizelements (in Richtung des Doppelpfeils 12) um den Querschnitt des Kernkörpers 3 herumzulegen. Das ringförmige Heizelement 5 sollte einen Durchmesser bzw. eine Länge kleiner als der Außenumfang des Kernkörpers 3 aufweisen, so dass es unter geringer Spannung auf dem Kernkörper 3 vorfixiert werden kann. Hilfreich hierfür ist eine Waben- oder Gitterstruktur des Grundmaterials 6, die eine entsprechende Dehnung des Grundmaterials 6 und damit des Heizelements zulässt.

Die verschiedenen Merkmale der Ausführungsformen der Heizelemente 5, wie sie in den Figuren dargestellt sind, können gegeneinander ausgetauscht oder miteinander kombiniert werden, insbesondere die Merkmale, die sich auf die überlappende oder aneinander stoßende Anordnung der Kanten des Grundmaterials 6 des Heizelements 5 beziehen.

## Patentansprüche

1. Lenkrad mit einem Lenkradkranz (1) und einem dreidimensional verformten Heizelement, (5) das einen oder mehrere Heizleiter (7), die wellen- oder mäanderförmig auf einem Grundmaterial (6) verlegt und mittels Näh- oder Stickfaden an dem Grundmaterial befestigt sind, umfasst und das auf einem Kernkörper (3) des Lenkradkranzes befestigt ist, wobei das Heizelement (5) an dem Kernkörper (3) durch ein Klebemittel befestigt ist, **dadurch gekennzeichnet dass**, das Heizelement (5) auf zumindest einem Teilbereich der dem Kernkörper (3) abgewandten Außenfläche des Grundmaterials (6) aufgebracht ist, wobei das Klebemittel das Grundmaterial (6) bis zum Kernkörper (3) durchdringt.

2. Lenkrad nach Anspruch 1, **dadurch gekennzeichnet, dass** das Grundmaterial (6) gitter- oder wabenförmige Öffnungen aufweist.

3. Lenkrad nach Anspruch 1 oder Anspruch 2, **dadurch gekennzeichnet, dass** das Klebemittel ein lösungsmittelfreies Klebemittel ist.

4. Lenkrad nach Anspruch 3, **dadurch gekennzeichnet, dass** das lösungsmittelfreie Klebemittel ein auf Wasser basierendes Klebemittel ist.

5. Lenkrad nach Anspruch 1 oder Anspruch 2, **dadurch gekennzeichnet, dass** das Klebemittel ein lösungsmittelhaltiges Klebemittel ist.

6. Lenkrad nach einem der Ansprüche 1 bis 5, **dadurch gekennzeichnet, dass** das Heizelement (5) um den Umfang des Kernkörpers (3) derart gelegt ist, dass Längskanten des Grundmaterials (6) in Querschnitts-Umfangsrichtung (12) des Kernkörpers (3) gesehen zumindest aneinanderstoßen, wobei das Klebemittel zumindest im Bereich der aneinanderstoßenden Längskanten des Grundmaterials (6) aufgebracht ist.

7. Lenkrad nach einem der Ansprüche 1 bis 5, **dadurch gekennzeichnet, dass** das Heizelement (5) um den Umfang des Kernkörpers (3) derart gelegt ist, dass Längskanten des Grundmaterials (6) in Querschnitts-Umfangsrichtung (12) des Kernkörpers (3) gesehen einen Spalt dazwischen belassend gegenüberliegend beabstandet sind, wobei das Klebemittel zumindest im Bereich dieser Längskanten des Grundmaterials (6) aufgebracht ist.

8. Lenkrad nach einem der Ansprüche 1 bis 7, **dadurch gekennzeichnet, dass** das Heizelement (5) um den Umfang des Kernkörpers (3) derart gelegt ist, dass Längskanten des Grundmaterials (6) in Radial-Umfangsrichtung (10) des Kernkörpers (3) gesehen zumindest aneinanderstoßen, wobei das Klebemittel zumindest im Bereich der aneinanderstoßenden Längskanten des Grundmaterials (6) aufgebracht ist.

9. Lenkrad nach Anspruch 8, **dadurch gekennzeichnet, dass** die zumindest aneinanderstoßenden Längskanten des Grundmaterials (6) in Radial-Umfangsrichtung (10) miteinander vernäht sind.

10. Lenkrad nach Anspruch 9, **dadurch gekennzeichnet, dass** das Heizelement (5) mit den vernähten Längskanten vorkonfektioniert ist.

11. Lenkrad nach einem der Ansprüche 1 bis 10, **dadurch gekennzeichnet, dass** das Heizelement (5) auf seiner dem Kernkörper (3) abgewandten Außenfläche durch einen Schaum zumindest teilweise umschlossen ist.

12. Lenkrad nach einem der Ansprüche 1 bis 11, **dadurch gekennzeichnet, dass** mit dem Klebemittel gleichzeitig ein Lenkradbezug (14) befestigt ist.

13. Lenkrad nach Anspruch 12, **dadurch gekennzeichnet, dass** der Lenkradbezug (14) auf seiner dem Kernkörper (3) zugewandten Innenfläche eine Polsterschicht aufweist.

14. Verfahren zum Befestigen eines dreidimensional verformten Heizelements an einem Kernkörper (3) eines Lenkradkranzes (1) eines Lenkrads, wobei das Heizelement (5) einen oder mehrere Heizleiter (7) aufweist, die wellen- oder mäanderförmig auf einem Grundmaterial (6) verlegt und mittels Näh- oder Stickfaden an dem Grundmaterial befestigt werden, wobei das Heizelement (5) an dem Kernkörper (3) mit Klebemittel befestigt wird, **dadurch gekennzeichnet dass**, das Klebemittel auf zumindest einem Teilbereich der dem Kernkörper (3) abgewandten Außenfläche des Grundmaterials (6), nachdem das Heizelement (5) auf dem Kernkörper (3) aufgelegt ist, derart aufgebracht wird, dass das Klebemittel das Grundmaterial (6) bis zum Kernkörper (3) durchdringt.

## Claims

1. Steering wheel having a steering wheel rim (1) and a three-dimensionally shaped heating element (5) which comprises one or plural heating conductors (7) laid in an undulating or meandering manner on a base material (6) and fixed by means of a sewing or embroidery thread to the base material, and which is attached to a core body (3) of the steering wheel rim, the heating element (5) being attached to the core body (3) by an adhesive, **characterized in that** the heating element (5) is applied to at least a subarea of the outer surface of the base material (6), said outer surface facing away from the core body (3), wherein the adhesive penetrates the base material (6) up to the core body (3).

2. Steering wheel according to claim 1, **characterized in that** the base material (6) comprises grid-shaped or honeycomb-shaped openings.

3. Steering wheel according to claim 1 or 2, **characterized in that** the adhesive is a solvent-free adhesive.

4. Steering wheel according to claim 3, **characterized in that** the solvent-free adhesive is a water-based adhesive.

5. Steering wheel according to claim 1 or claim 2, **characterized in that** the adhesive is a solvent-containing adhesive.

6. Steering wheel according to any one of claims 1 to 5, **characterized in that** the heating element (5) is laid around the circumference of the core body (3) such that longitudinal edges of the base material (6), viewed in cross-sectional circumferential direction (12) of the core body (3), at least abut on one another, wherein the adhesive is applied at least in the area of the abutting longitudinal edges of the base material (6).

7. Steering wheel according to any one of claims 1 to 5, **characterized in that** the heating element (5) is laid around the circumference of the core body (3) such that longitudinal edges of the base material (6), viewed in cross-sectional circumferential direction (12) of the core body (3), are oppositely spaced apart while leaving a gap thereinbetween, wherein the adhesive is applied at least in the area of said longitudinal edges of the base material (6).

8. Steering wheel according to any one of claims 1 to 7, **characterized in that** the heating element (5) is laid around the circumference of the core body (3) such that longitudinal edges of the base material (6), viewed in radial circumferential direction (10) of the core body (3), at least abut on one another, wherein the adhesive is applied at least in the area of the abutting longitudinal edges of the base material (6).

9. Steering wheel according to claim 8, **characterized in that** the at least abutting longitudinal edges of the base material (6) are sewn to one another in radial circumferential direction (10).

10. Steering wheel according to claim 9, **characterized in that** the heating element (5) with the sewn longitudinal edges is prefabricated.

11. Steering wheel according to any one of claims 1 to 10, **characterized in that** the heating element (5) is at least partly enclosed by a foam on its outer surface facing away from the core body (3).

12. Steering wheel according to any one of claims 1 to 11, **characterized in that** with the adhesive a steering wheel cover (14) is attached at the same time.

13. Steering wheel according to claim 12, **characterized in that** the steering wheel cover (14) has a padding layer on its inner surface facing the core body (3).

14. Method for fixing a three-dimensionally shaped heating element to a core body (3) of a steering wheel rim (1) of a steering wheel, the heating element (5) comprising one or plural heating conductors (7) which are laid in an undulating or meandering manner on a base material (6) and are fixed by means of a sewing or embroidery thread to the base material, the heating element (5) being attached to the core body (3) with adhesive, **characterized in that** the adhesive is applied to at least a subarea of the outer surface of the base material (6), the outer surface facing away from the core body (3), after the heating element (5) has been placed on the core body (3), in such a manner that the adhesive penetrates the base material (6) up to the core body (3).

## Revendications

1. Volant de direction comprenant une couronne de volant de direction (1) et un élément chauffant (5) déformé de manière tridimensionnelle, qui comporte un ou plusieurs conducteurs chauffants (7) posés de manière ondulée ou en forme de méandres sur un matériau de base (6) et fixés au matériau de base à l'aide de fils de couture ou de broderie, et qui est fixé sur un corps formant âme centrale (3) de la couronne, l'élément chauffant (5) étant fixé au corps formant âme centrale (3) par une colle, **caractérisé en ce que** l'élément chauffant (5) est placé sur au moins une zone partielle de la surface extérieure du matériau de base (6) non dirigée vers le corps formant âme centrale (3), la colle traversant le matériau de base (6) jusqu'au corps formant âme centrale (3).

2. Volant de direction selon la revendication 1, **caractérisé en ce que** le matériau de base (6) présente des ouvertures en forme de treillis ou de nids d'abeille.

3. Volant de direction selon la revendication 1 ou la revendication 2, **caractérisé en ce que** la colle est une colle exempte de solvant.

4. Volant de direction selon la revendication 3, **caractérisé en ce que** la colle exempte de solvant est une colle à base d'eau.

5. Volant de direction selon la revendication 1 ou la revendication 2, **caractérisé en ce que** la colle est une colle renfermant du solvant.

6. Volant de direction selon l'une des revendications 1 à 5, **caractérisé en ce que** l'élément chauffant (5) est placé autour de la périphérie du corps formant âme centrale (3) de manière à ce que des bords longitudinaux du matériau de base (6), vu dans la direction périphérique de section transversale (12) du corps formant âme centrale (3), soient au moins jointifs, la colle étant appliquée au moins dans la zone des bords longitudinaux jointifs du matériau de base (6).

7. Volant de direction selon l'une des revendications 1 à 5, **caractérisé en ce que** l'élément chauffant (5) est placé autour de la périphérie du corps formant âme centrale (3) de manière à ce que des bords longitudinaux du matériau de base (6), vu dans la direction périphérique de section transversale (12) du corps formant âme centrale (3), soient espacés mutuellement par un interstice intermédiaire, la colle étant appliquée au moins dans la zone de ces bords longitudinaux du matériau de base (6).

8. Volant de direction selon l'une des revendications 1 à 7, **caractérisé en ce que** l'élément chauffant (5) est placé autour de la périphérie du corps formant âme centrale (3) de manière à ce que des bords longitudinaux du matériau de base (6), vu dans la direction périphérique radiale (10) du corps formant âme centrale (3), soient au moins jointifs, la colle étant appliquée au moins dans la zone des bords longitudinaux jointifs du matériau de base (6).

9. Volant de direction selon la revendication 8, **caractérisé en ce que** les bords longitudinaux au moins jointifs du matériau de base (6) sont cousus ensemble dans la direction périphérique radiale (10).

10. Volant de direction selon la revendication 9, **caractérisé en ce que** l'élément chauffant (5) avec ses bords longitudinaux cousus, est pré-confectionné.

11. Volant de direction selon l'une des revendications 1 à 10, **caractérisé en ce que** l'élément chauffant (5), sur sa surface extérieure non dirigée vers le corps formant âme centrale (3), est enveloppé au moins partiellement par une mousse.

12. Volant de direction selon l'une des revendications 1 à 11, **caractérisé en ce qu'**à l'aide de la colle est fixée simultanément une garniture de revêtement de volant de direction (14).

13. Volant de direction selon la revendication 12, **caractérisé en ce que** la garniture de revêtement de volant de direction (14) présente, sur sa surface intérieure dirigée vers le corps formant âme centrale (3), une couche de rembourrage.

14. Procédé pour fixer un élément chauffant déformé de manière tridimensionnelle sur un corps formant âme centrale (3) d'une couronne de volant de direction (1) d'un volant de direction, l'élément chauffant (5) présentant un ou plusieurs conducteurs chauffants (7) que l'on pose de manière ondulée ou en forme de méandres sur un matériau de base (6) et que l'on fixe au matériau de base à l'aide de fils de couture ou de broderie, l'élément chauffant (5) étant fixé au corps formant âme centrale (3) par une colle, **caractérisé en ce que** la colle est appliquée sur au moins une zone partielle de la surface extérieure du matériau de base (6) non dirigée vers le corps formant âme centrale (3), après que l'élément chauffant (5) ait été placé sur le corps formant âme centrale (3), de manière telle que la colle traverse le matériau de base (6) jusqu'au corps formant âme centrale (3).
